Europäisches Patentamt

European Patent Office

Office européen des brevets

(11) Numéro de publication: **0 323 379**
**A1**

## (12) DEMANDE DE BREVET EUROPEEN

(21) Numéro de dépôt: 88460033.9

(22) Date de dépôt: 15.12.88

(51) Int. Cl.⁴: **H 02 H 9/06**
H 02 H 3/04

(30) Priorité: 31.12.87 FR 8718541

(43) Date de publication de la demande:
05.07.89 Bulletin 89/27

(84) Etats contractants désignés:
BE CH DE ES GB IT LI

(71) Demandeur: Cordier, Jaques Henri Emile
La Cossonnière
F-44640 Le Pellerin (FR)

(72) Inventeur: Cordier, Jaques Henri Emile
La Cossonnière
F-44640 Le Pellerin (FR)

(54) **Atténuateur de surtension double effet.**

(57) Dispositif de protection des équipements electroniques contre les surtensions.

Dispositif comprenant deux étages d'écoulement de charge de foudre et de frein de l'onde de choc (étages A et B). Un étage frein et court-circuit de la ligne contre les surtensions par défaut d'isolement accidentel (étage D). Un étage amortisseur et absorbeur de la charge ou potentiel résiduel, et de verrou de potentiel de terre (étage C). Un moyen de constat et de mémorisation de la surtension (repères 4 et 9). Une constitution mécanique et une disposition des bornes et des organes propre à éviter les amorçages entres eux.

Dispositif utilisable sur toutes lignes bifilaires supports de signaux analogiques our numériques, et comporte un moyen de réglage de niveau de signal (repères 18 et 19) et de correction d'affaiblissement (répères 15 et 15').

EP 0 323 379 A1

## Description

### ATTENUATEUR DE SURTENSION DOUBLE EFFETS

La présente invention a pour objet la protection contre les surtensions des appareils utilisant des composants électroniques et reliés pour recevoir et émettre des informations analogiques ou numériques sur des liaisons bifilaires réservées aux dispositifs "courants faibles" du réseau général commuté ou spécialisé des télécommunications ou réseaux privés notamment.

Cette surtension peut être d'ordre orageuse ou autres.

Dans ce domaine, à notre connaissance, il existe un certain nombre de dispositif mais n'utilisant que des éclateurs à gaz,voir associés à une protection complémentaire comportant des varistances,et quelque fois doublés d'une paire de selfs à air en series et des fusibles.

La présente invention, tout en conservant une partie des élements cités,va plus loin dans la recherche et introduit des composants spécifiques et fabriqués à son usage exclusif.

Son objet étant :

**UN HAUT POUVOIR D'ECOULEMENT** des courants de foudre à la terre.

**TRIPLE VERROUS** de protection

**DOUBLE EFFETS,** car étudié pour amortir également les chocs en retour des effets de foudre en cas de déséquilibre de prise de terre.

**PUISSANCE RESIDUELLE** en sortie de protection en dessous des puissances de service des composants électroniques intégrés.

**DISPOSITIF CONCU POUR RECEVOIR** des liaisons **ANALOGIQUES** ou des liaisons **NUMERIQUES**.

**PRODUIT INDUSTRIEL** conçu pour une trés haute tenue mécanique aux ondes de chocs de foudre.

**REARMEMENT AUTOMATIQUE** aprés retour à la normal.

**INDICATEUR ELECTRONIQUE** du passage le courant de surtension **SYSTEME EQUILIBRE SYMETRIQUE**, correcteur et éventuellement amplificateur de signal et raccordable sur tous types de terminaux analogiques et numériques.

A cette effet l'invention à pour objet un dispositif de protection contre les surtentions de foudre ou autres utilisable sur tous types de liaisons bifilaires " courants faibles" et comprenant:un moyen de protection instantanné à faible débit (étage B),un moyen de protection arrière et retour de terre (étage C),un moyen de protection à haut débit (étage A ),un moyen de protection contre les alimentations anormales (étage D),un moyen indicateur de passage de courant de surtension repères 4 et 9),des moyens d'auto-protection contre les amorçages,un moyen pour son utilisation en liaison analogique ou numérique avec ou sans alimentation continue,un moyen de correction d'amplitude de signal.

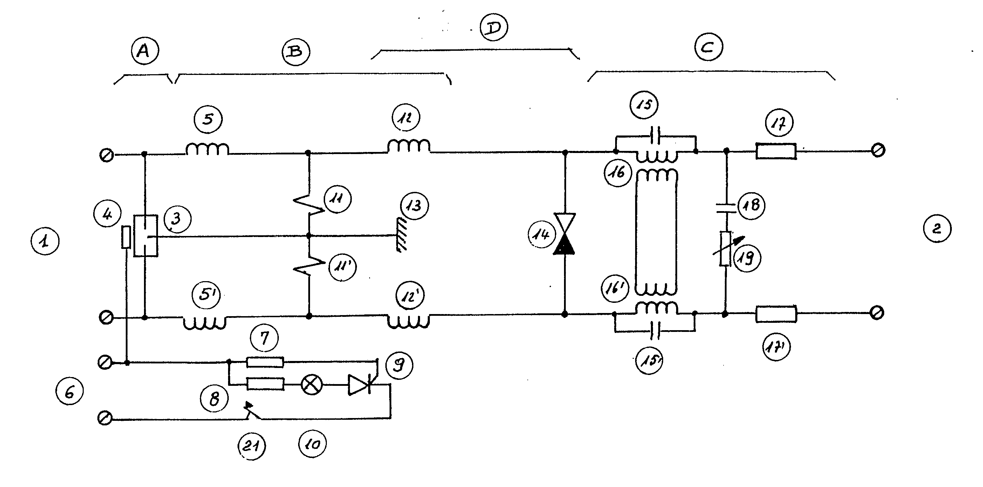

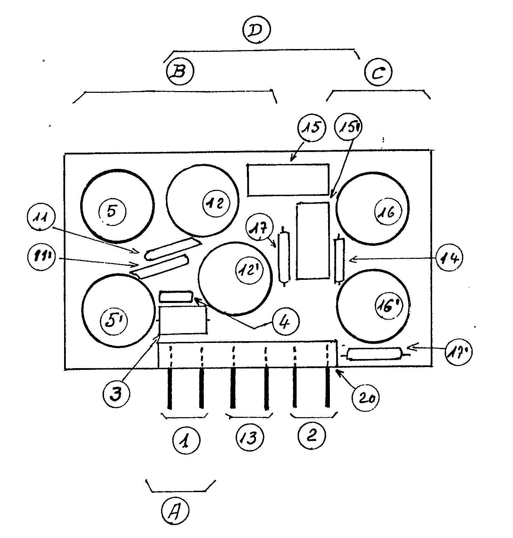

La présente invention est illustrée par les planches 1/2 et 2/2 représentant respectivement : Le schéma électrique du dispositif. La présentation mécanique du produit sur son support circuit imprimé

Le dispositif présente une entrée (1) raccordée à une liaison bifilaire et une sortie (2) raccordée à l'installation ou au terminal à protéger. Deux cas peuvent se présenter :

a/Surtension d'ordre atmosphérique ou provenant d'un défaut d'isolement avec le réseau de distribution d'électricité moyenne tension.

b/Différence de potentiel importante de terre consécutive à un foudroiement proche.

a/ Dans le cas de foudre , un potentiel anormal va apparaitre à l'entrée (1), sur un ou sur les deux conducteurs, et devra être canalisé vers la terre en (13). Premier ralentisseur de l'effet de choc (étage B) ,les selfs à air (5 et 5') et première réaction rapide des varistances G MOV (11 et11').Second verrou (étage B) les selfs à air (12 et 12') bloquent le passage au front raide de foudre favorisant l'amorçage des varistances G-MOV (11 et 11') et permettant un gain de plusieurs micros-seconde. Troisième verrou (étage C), les deux transformateurs sans fer (16 et 16') qui assoçiés par leur secondaire en respectant bien les sens de bobinages et de raccordements, écrasent quasiment totalement la pente de la surtension.Enfin les résistances pures (17 et 17') absorbent la grande partie de l'energie résiduelle.Dans ce même temps dans une fourchette entre des nanos et des microsseconde l'éclateur à gaz (3) (étage A) qui réagit dans la deuxième échelle de temps, s'amorce et met la ligne en ètat de court-circuit entre les deux conducteurs et la terre, assurant ainsi par sa constitution un très important courant d'ècoulement. La surtension annulèe, le dispositif revient à son état original.

Dans la pratique un composant aussi bien conçu soit-il ne peut sans subir de dommages des chocs de cette puissance, et les constructeurs de ce type de matériel recommandent l'utilisation pour un nombre donné de chocs.Le problème est de savoir lorsque il y a eu choc? La présente invention résout le probléme en ajoutant au dispositif un appendice constitué par une cellule photoconductrice (4) qui va constater l'allumage de l'èclateur a gaz (3) par l'éclairement que cette allumage provoque, la cellule (4) devenant de ce fait passante,alimente la gachette du thyristor (9) qui va se dèbloquer et assurer l'allumage de la leed avertisseuse (10) et maintenir cet allumage jusqu'à une extinction manuelle humaine par l'ouverture du contact de remise à zéro (21).Les rèsistances (7 et 8) sont uniquement destinées à l'èquilibrage des circuits.

Autres cas, une surtension d'origine du réseau électrique moyenne tension apparait en (1) et si :
- Elle se produit sur un conducteur la même processus que prècèdement se produit.

Avec une différence de potentiel entre les deux conducteurs ,la diode bidirectionnelle transil (14) va court-circuiter la ligne avec le même effet de frein et d'attènuation par les selfs à air (5 et 5') et (12 et 12') ainsi que d'amortissement des transformateurs sans fer (16 et 16'). Ce court-circuit se maintient jusqu'au retour à la normal de la ligne (étage D).

b/ A la suite d'un foudroiement proche les potentiels de terre s'élèvent à des niveaux de l'ordre de milliers de volts et compte tenu de l'assimilation de l'onde de foudre à de la haute fréquence, les plus infimes différences de résistance ohmique des liaisons de terre deviennent des impédances énormes et aussi est-il à l'expérience illusoire de vouloir réussir à les annuler totalement. Dans la présente invention l'emplacement des deux transformateurs sans fer (16 et 16') dans le dispositif prend toute sa valeur. Ce montage maintient quelque soit la nature de la surtension l'équilibre entre les deux conducteurs et évite ainsi les différences de potentiel destructrices,et de même amorti quasiment totalement les différences de potentiels entre les différents points de terre et la terre de l'atténuateur (13) laissant ainsi le temps à la charge de s'écouler naturellement en cheminant par les couches de la constitution du terrain.Les condensateurs (15 et 15') sont destinés à favoriser la circulation des courants périodiques de transmission sur la ligne et notamment pour les fréquences téléphoniques de 300 à 3400 HZ.

L'ensemble représenté par le condensateur (18) et la résistance variable (19) constitue un moyen de réglage d'amplification du signal numérique entre 10 et 100 Kb/s et est utilisé uniquement en liaison numérique pour la norme CCITT N°7 à 64 Kbits/s et 16 Kbits/s où le dispositif peut amplifier le signal de plusieurs décibels et s'étalonnera en fonction de la ligne.

Dans la pratique la résistance sera fixe et calibrée pour une valeur moyenne de ligne ,et sa valeur est donnée au paragraphe valeur des composants.Le positionnement des éléments représenté par la planche 2/2 a été calculé et contrôlé pour éviter les amorçages entre eux.De même les bornes du bornier de raccordement ont un écartement de 8 millimétres et un positionnement précis,en regardant le dispositif côté composants,l'entrée (1) utilise les deux bornes de gauche,la prise de terre utilise deux bornes au centre et la sortie (2) du dispositif prend les deux bornes de droite.L'ensemble est maintenu séparé par le support (20).

Les deux bornes du repère (6) sont la raccordement de l'alimentation du dispositif en tension continue 12/24/ ou 48 volts sous quelques milliampères pour sa partie annonciateur de choc.

Valeurs des composants :
1/ Dispositif analogique,
éclateur tripolaire (3):tension d'amorçage 240 Volts.
cellule photoconductrice (4):résistance ohmique entre l'infini et 250 Ohms suivant éclairement.

Selfs à air (5 ,5') et (12 ,12') 140 spires de cuivre émaillé de 0.6 millimètre de diamètre,bobinées sur un noyau en matière plastique de 8 millimètres de diamètre intérieur et de 16 millimètres de diamètre extérieur.
Résistance (7): 6500 Ohms.
Résistance (8): 1000 Ohms.
Thyristor (9): TIC 106 M ou similaire.
Leed (10): Normal du commerce.
Varistances G - MOV (11 et 11'):Amorçage à 110 Volts.
Diode bidirectionnelle TRANSIL (14):Retournement à 110 Volts.

Transformateurs sans fer (15 et 15'):Bobine plastique de 8 millimètres de diamètre interieur et 16 millimètres de diamètre extèrieur,circuit primaire recouvrant le circuit secondaire ,et comportant chacun 70 spires en fil émaillé de 0,6 millimètre de diamètre avec des valeurs de 0,59 ohm et 63 microhenry pour le circuit primaire et 0,4 ohm et 41,5 microhenry pour le circuit secondaire.
Condensateurs (15 et 15'): 2,2 microfarads sous 63 volts.
Résistances (17 et 17'): 15 ohms 5 watts.
Condensateur (18): 0,68 microfarad 250 volts.
Résistance (19): 240 ohms 5 watts.

2/ Dispositif numérique,
Les valeurs sont strictement identiques sauf pour:
Eclateur tripolaire (3): amorçage à 110 Volts.
Varistances G- MOV (11 et 11'): amorçage à 60 volts.
Diode bidirectinnelle TRANSIL (14): retournement à 60 volts

Avec ces valeurs le dispositif a subi en onde 8/20 microsecondes normalisées des chocs à 6500 volts et 6500 ampères en entrée (1),pour un résiduel constaté en sortie (2) de 3 volts éfficace crète crète et de 7,5 milliampères.

## Revendications

1 Dispositif de protection contre les surtensions de foudre ou autres utilisable sur tous les types de liaisons bifilaires "courants faibles ",comprenant un moyen de protection instantanné à faible débit (étage B),un moyen de protection arrière et retour de terre (étage C), un moyen de protection à haut débit (étage A), un moyen de protection contre les alimentations anormales (étage D), un moyen indicateur de passage de courant de surtension (repères 4 et 9),des moyens d'auto-protection contre les amorçages, un moyen pour son utilisation en liaison analogique ou numérique avec ou sans alimentation continue ,un moyen de correction d'amplitude de signal.

2 dispositif selon la revendication 1 ,caractérisé en ce que le moyen de protection instantané (étage B ) comprend deux selfs à air séries (5 et 5') en amont,deux varistances en parallèle sur la ligne (11 et 11') reliées à la terre(13), et deux selfs à air series ( 12 et 12') en aval par rapport à l'entrée (1).

3 Dispositif selon la revendication 1 ,caractérisé en ce que le moyen de protection arrière et retour de terre (étage C),comprend deux transformateurs sans fer (16 et 16') dont les enroulements primaires sont en series dans les fils de ligne,et les enroulements secondaires sont fermés l'un sur l'autre en respectant les sens de bobinage et de raccordement du circuit et du bobinage,et comprenant également deux résistances (17 et 17') en série à l'extémité sortie (2) du dispositif.

4 Dispositif selon la revendication 1,caractérisé en ce que le moyen de protection haut débit (étage A) comprend un éclateur tripolaire à gaz (3).

5 Dispositif selon revendication 1,caractérisé en ce que le moyen contre les alimentations anormales (étage D) est constitué de deux selfs à air en série (12 et 12') et d'une diode bidirectionnelle TRANSIL (14) en parallèle sur ligne et située en aval des selfs à air (12 et 12') et en amont des transformateurs (15 et 15').

6 Dispositif selon la revendication 1,caractérisé en ce que le moyen indicateur de passage de courant est constitué d'une cellule photoconductrice (4) plaquée contre l'éclateur tripolaire (3),de deux résistances (7)(8),d'un thyristor (9),d'une leed (10),et d'un bouton de remise à zéro.

7 Dispositif selon la revendication 1,caractérisé en ce que le moyen d'auto protection contre les amorçages comprend la disposition mécanique des composants telle que représentée sur la planche 2/2,l'écartement des bornes de raccordement à 8 millimètres,les bornes de l'entrée (1) à gauche,de la sortie (2) à droite,et les deux bornes terre (13),au centre.

8 Dispositif selon la revendication 1,caractérisé en ce que le moyen de correction d'affaiblissement de signaux électriques analogiques ou numériques dans la fréquence 300 à 3400 HZ comprend les condensateurs (15 et 15') en parallèle sur les enroulements primaires des transformateurs (16 et 16').

9 Dispositif selon la revendication 1,caractérisé en ce que le moyen de réglage d'amplification du signal numérique entre 10 et 100 Kbits/s est composé d'un condensateur (18) en serie avec une résistance (19),l'ensemble raccordé en parallèle sur les deux fils de ligne entre les transformateurs (16 et 16')et les résistances d'extrémité (17 et 17').

EP 0 323 379 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A | FR-A-2501931 (LES CABLES DE LYON)<br>* page 3, ligne 19 - page 5, ligne 12 *<br>--- | 1,2,4,5,<br>7-9 | H02H9/06<br>H02H3/04 |
| A | DE-A-3027469 (LICENTIA PATENT-VERWALTUNGS-GMBH)<br>* page 5, ligne 27 - page 6, ligne 28 *<br>--- | 1-4 | |
| A | FR-A-2397728 (SPRECHER & SCHUH)<br>* page 1, ligne 33 - page 2, ligne 3 *<br>--- | 1,6 | |
| A | TELECOMMUNICATIONS AND RADIO ENGENEERING<br>vol. 27/28, no. 7, juillet 1973, WASHINGTON<br>page 30 - 32; S.A.SOLOKOV:<br>"GROUNDING OF THE MIDPOINT OF MATCHING DEVICES<br>TO IMPROVE PROTECTION CIRCUITS"<br>* page 30, alinéa 1 *<br>----- | 1,8,9 | |

**DOMAINES TECHNIQUES RECHERCHES (Int. Cl.4 )**

H02H9/00
H02H3/00
H04M3/00
H01T1/00

Le présent rapport a été établi pour toutes les revendications

| Lieu de la recherche | Date d'achèvement de la recherche | Examinateur |
|---|---|---|
| LA HAYE | 06 AVRIL 1989 | LIBBERECHT L.A. |